# Europäisches Patentamt

## European Patent Office

## Office européen des brevets

(11) Veröffentlichungsnummer: **0 180 900**
**B1**

(12) **EUROPÄISCHE PATENTSCHRIFT**

(45) Veröffentlichungstag der Patentschrift: **22.08.90**

(21) Anmeldenummer: **85113753.9**

(22) Anmeldetag: **29.10.85**

(51) Int. Cl.$^5$: **B 01 D 11/02**, B 01 J 37/00, B 01 J 20/00

(54) **Verfahren zur Einstellung der Struktur- und/oder Oberflächeneigenschaften von oxidischen Materialien.**

(30) Priorität: **02.11.84 DE 3440018**

(43) Veröffentlichungstag der Anmeldung:
**14.05.86 Patentblatt 86/20**

(45) Bekanntmachung des Hinweises auf die
Patenterteilung:
**22.08.90 Patentblatt 90/34**

(84) Benannte Vertragsstaaten:
**AT BE CH DE FR GB IT LI LU NL SE**

(56) Entgegenhaltungen:
**EP-A-0 065 106
EP-A-0 065 222
EP-A-0 067 741
EP-A-0 171 722
DE-A-3 011 185
US-A-2 093 454
US-A-4 055 904**

**CHEMIE INGENIEUR TECHNIK, Band 53, Nr. 7,
Juli 1983, Seiten 529-542, Verlag Chemie GmbH,
Weinheim, DE; G. BRUNNER et al.: "Zum Stand
der Extraktion mit komprimierten Gasen."**

(73) Patentinhaber: **Kali-Chemie Aktiengesellschaft
Postfach 220, Hans-Böckler-Allee 20
D-3000 Hannover 1 (DE)**

(72) Erfinder: **Hupe, Bernd, Dr. rer. nat.
Reekeweg 4
D-3250 Hameln 16 (DE)**
Erfinder: **Walter, Robert, Dr. rer. nat.
Hindenburgstrasse 64
D-3012 Langenhagen (DE)**

(74) Vertreter: **Lauer, Dieter, Dr.
c/o Kali-Chemie Aktiengesellschaft Postfach 220
D-3000 Hannover 1 (DE)**

**Beschreibung**

Die Erfindung betrifft ein Verfahren zur Einstellung der Struktur- und/oder Oberflächeneigenschaften von oxidischen Materialien.

Für den Einsatz von oxidischen Materialien in Verfahren, in denen die katalytischen und/oder adsorptiven Eigenschaften dieser Materialien zum Tragen kommen, ist es notwendig, die Struktur- und/oder Oberflächeneigenschaften gezielt und reproduzierbar einzustellen. Nach dem üblichen Stand der Technik erfolgt diese Einstellung durch thermische Behandlung von anorganischen Oxidgelen, wobei geformtes oder ungeformtes Gel bei erhöhter Temperatur getrocknet und anschließend bei weiter erhöhter Temperatur getempert wird. Die Oberflächeneigenschaften können dabei einerseits durch besondere Maßnahmen bei der Herstellung der Oxidgele wie Zusatz von Additiven, Einstellung von pH-Werten etc. und andererseits durch Variation von Zeit- und Temperatur-Profil der obligatorischen thermischen Behandlung eingestellt werden.

Es ist weiterhin bekannt, aus anorganischen Oxidgelen das Lösungsmittel durch thermische Behandlung unter überkritischen Bedingungen zu entfernen. So wird in der US—A—2 093 454 ein Verfahren beschrieben, bei dem wäßriges Kieselgel in einem Autoklaven auf eine Temperatur gebracht wird, die oberhalb der kritischen Temperatur des Wassers (+374°C) liegt. Unter diesen Bedingungen wird das Wasser aus dem Autoklaven abgezogen und ein trockenes Gel erhalten. Bedingt durch die hohe Lösungskraft des Wassers kann das ursprünglich gebildete Kieselgel aber vor Erreichen der kritischen Temperatur wieder aufgelöst werden und fällt dann nach der Trocknung als feinteiliges Pulver an. Außerdem erfoldert dieses Verfahren sehr hohe Temperaturen. Zur Herstellung von Oxidgelen, bei denen die Struktur des lösungsmittelhaltigen Gels erhalten bleiben soll, wird daher bei jenem Verfahren bevorzugt, das Wasser vorher durch ein Lösungsmittel zu verdrängen, das eine niedrigere kritische Temperatur als Wasser besitzt und dann dieses Lösungsmittel bei den entsprechenden Temperaturen zu verdampfen. Dieses Verfahren ist aber ebenfalls recht aufwendig, da eine weitere Verfahrensstufe notwendig ist, teure Lösungsmittel eingesetzt werden müssen und immer noch recht hohe Temperaturen erforderlich sind.

Aus der EP—A—0 067 741 ist ebenfalls ein Verfahren zur Herstellung von Siliciumdioxid-Aerogelen bekannt. Nach diesem Verfahren wird ein Siliciumalkoholat in einem, bei 25°C und 1 bar flüssigen nichtwäßrigen Lösungsmittel, insbesondere Methanol, unter Zusatz einer begrenzten, gegebenenfalls überstöchiometrischen Menge an Wasser hydrolysiert. Nach Zugabe einer weiteren Menge des nichtwäßrigen Lösungsmittels wird das entstandene Gel, das neben dem Lösungsmittel allenfalls noch geringe Mengen Wasser enthält, unter überkritischen Bedingungen getrocknet. Weder finden sich Hinweise auf den Einsatz von Gelen, deren Lösungsmittelanteil zu einem erheblichen Teil oder vollständig aus Wasser besteht noch auf die Verwendbarkeit von Extraktionsmitteln, die bei 25°C und 1 bar gasförmig sind.

Ein Verfahren zur Herstellung von anorganischen oxidischen Aerogelen aus lösungsmittelhaltigen Gelen unter Anwendung eines Extraktionsmittels, das bei 25°C und 1 bar gasförmig ist, nämlich $CO_2$, wird in der EP—A—0 171 722, einer älteren, nicht vorveröffentlichten europäischen Patentanmeldung, vorgeschlagen. Dort wird beschrieben, daß das Lösungsmittel mit flüssigem oder überkritischem $CO_2$ entfernt werden kann. Es werden dort jedoch ausschließlich solche lösungsmittelhaltigen Gele mit $CO_2$ extrahiert, deren Lösungsmittel im wesentlichen wasserfrei ist, Etwaig wasserhaltige Lösungsmittel werden vor der Extraktion mit $CO_2$ gegen wasserfreie Lösungsmittel, insbesondere Alkohole, ausgetauscht. Die unmittelbare Extraktion von lösungsmittelhaltigen, anorganischen Oxidgelen, deren Lösungsmittelanteil zu mindestens 50 Gew.-% aus Wasser besteht, mit bezüglich des Druckes überkritischem Gas ist nach jenem Verfahren ausgeschlossen.

Aufgabe der Erfindung ist es, ein neues Verfahren zur Einstellung von Struktur und/oder Oberflächeneigenschaften von oxidischen Materialien zur Verfügung zu stellen, das die Nachteile des Standes der Technik überwindet.

Diese Aufgabe wird gelöst durch das in den Ansprüchen wiedergegebene Verfahren.

Im erfindungsgemäßen Verfahren zur Einstellung der Struktur- und/oder Oberflächeneigenschaften von oxidischen Materialien wird das Lösungsmittel aus lösungsmittelhaltigen anorganischen Oxidgelen, deren Lösungsmittelanteil zu mindestens 50 Gew.-% aus Wasser besteht, entfernt, indem das lösungsmittelhaltige anorganische Oxidgel in eine Extraktionskammer eingebracht und durch diese ein bei Normalbedingungen (25°C und 1 bar) gasförmiges Extraktionsmittel hindurchgeleitet wird, wobei der Druck oberhalb des kritischen Druckes des Extraktionsmittels liegt.

Im Unterschied zur thermischen Behandlung wird das Lösungsmittel Wasser nicht direkt verdampft sondern mit einem Extraktionsmittel entfernt. Dabei muß auch nicht die kritische Temperatur von Wasser überschritten werden.

Als anorganische Oxidgele, die nach dem erfindungsgemäßen Verfahren entwässert werden können, kommen prinzipiell alle an sich bekannten Oxidgele in Frage. Insbesondere sind dieses die Oxidgele auf Basis von Magnesium, Aluminium, Silicium, Zink, Titan, Zirkon und/oder Hafnium, wobei bevorzugt Gele von Aluminiumoxid und/oder Siliciumdioxid in Frage kommen.

Der Begriff anorganisches Oxidgel umfaßt dabei sowohl reine Oxidgelle als auch Mischgele von mehreren Oxiden. Als Mischgele kommen dabei insbesondere binäre oder ternäre Mischgele in Frage, deren einer Bestandteil Siliciumdioxid ist. Besonders bevorzugtes binäres Mischgel enthält Siliciumdioxid und Aluminiumoxid.

Als anorganisches Oxidgel wird auch ein solches Gel verstanden, das neben der gelbildenden, oxidischen Komponente weitere, die anwendungstechnischen und/oder katalytischen Eigenschaften verbessernde Zusätze enthält. Solche Zusätze können feste Feinanteile oder Metallionen enthaltende Zusätze sein, wie z.B. Feinanteile auf der Basis $SiO_2$ und/oder $Al_2O_3$, Metallpulver, Metalloxide wie Oxide von Übergangsmetallen, Metallsalze, insbesondere von Edelmetallen und/oder Übergangsmetallen.

Im erfindungsgemäßen Verfahren einsetzbares Oxidgel kann sowohl Zusätze der einen oder der anderen Art oder auch beide Zusatzarten gemeinsam enthalten.

Der Wassergehalt der erfindungsgemäß zu behandelnden Oxidgele kann in weiten Grenzen variieren. Bevorzugte Wassergehalte liegen im Bereich von 30 bis 95 Gew.-%, insbesondere 40 bis 90 Gew.-%. Solche Gele können sowohl noch nicht vorgetrocknete Gele sein, die z.B. aus einer an sich bekannten Sol/Gel-Fällung nach der Waschstufe entnommen werden und typischerweise 75 bis 95 Gew.-% Wasser enthalten. Es können aber auch bereits vorgetrocknete Gele eingestzt werden. Solche Gele sind aber zweckmäßig noch nicht Trockentemperaturen von über 100°C, vorzgusweise nicht über 50°C ausgesetzt gewesen. Ein typisches Beispiel für solche Gele sind sprühgetrocknete Gele, die z.B. einen Wassergehalt von 30 bis 60 Gew.-% aufweisen und nach dem Stand der Technik nur noch einer Calcinierung unterworfen werden.

Das erfindungsgemäße Verfahren entwässert die wasserhaltigen Oxidgele unter sehr schonenden Bedingungen. So liegt die Temperatur oberhalb von 10°C, vorzugsweise oberhalb von 25°C. Nach oben hin sind zwar prinzipiell keine Grenzen gesetzt; es hat sich aber gezeigt, daß Temperaturen bis zu 100°C ausreichend sind um den gewünschten Entwässerungsgrad zu erreichen.

Begrenzender Parameter für das erfindungsgemäße Verfahren ist der Druck bei dem entwässert wird. Dieser soll mindestens dem kritischen Druck des Extraktionsmittels entsprechen und kann maximal bis zu 1000 bar, vorzugsweise bis zu 500 bar betragen. Sofern als Extraktionsmittel Gemische eingesetzt werden, so wird erfindungsgemäß unter "kritischer Druck des Gemisches" der jeweils niedrigste kritische Druck der reinen Gemischbestandteile verstanden, sofern der kritische Druck des Gemisches nicht noch unter diesem Wert liegt.

Erfindungsgemäß werden solche Extraktionsmittel eingesetzt, die bei Normalbedingungen (25°C/1 bar) gasförmig sind.

Solche Extraktionsmittel sind insbesondere $CO_2$, $CHF_3$, $CF_3$—$CF_3$, $CHCl$=$CF_2$, $CF_3$—$CH_3$, $CHF_2$—$CH_3$, $CHF_2Cl$, $CF_3Cl$, $CF_2$=$CF_2$, $CF_2Cl_2$, $C_3F_8$, $SF_6$, $N_2O$, $SO_2$, Äthan, Äthen, Propan, Propen, Luft, $N_2$, $NH_3$, Methyl-, Äthylamin; besonders bevorzugtes Extraktionsmittel ist $CO_2$.

Der kritische Druck für jede dieser Verbindungen ist an sich bekannte und kann einschlägigen Monographien wie z.B. Handbook of Compressed Gases, 2. Auflage, New York 1981 entnommen werden.

Die Entwässerung wird in für Extraktionen mittels überkritischen Extraktionsmitteln an sich bekannter Weise durchgeführt, wie z.B. in der DE—A—30 11 185 beschrieben. So wird das zu entwässernde Oxidgel in eine Extraktionskammer eingebracht. Es kann dabei sowohl in amorpher Form als auch bevorzugt in vorgeformter, insbesondere kugelförmiger Form vorliegen. Zur Entwässerung wird das Oxidgel mit dem komprimierten Extraktionsmittel kontaktiert. Es ist dabei von Vorteil, das komprimierte Extraktionsmittel kontinuierlich oder intermittierend durch die Extraktionskammer zu leiten, wobei entsprechend dem Zustrom an Extraktionsmittel wasserhaltiges Extraktionsmittel aus der Extraktionskammer abgezogen wird. Aus diesem kann durch Druck- und/oder Temperatursenkung Wasser entfernt werden und es kann dann wieder auf Extraktionsdruck und/oder -Temperatur gebracht und erneut in die Extraktionskammer zurückgeführt werden.

Der Zeitbedarf für das erfindungsgemäße Verfahren hängt von den Randbedingungen wie z.B. Durck, Temperatur, gewünschter Entwässerungsgrad, Entwässerungsgeschwindigkeit, Mengenverhältnis von Oxidgel zu Extraktionsmittel usw. ab und ist im Einzelfalle leicht zu ermitteln.

Die nach dem erfindungsgemäßen Verfahren hergestellten Produkte finden bevorzugt Verwendung für die Adsorption und/oder für katalytische Zwecke.

Das erfindungsgemäße Verfahren erlaubt, Struktureigenschaften—wie z.B. Porenvolumen, Porenradienverteilung, Porenart, Verteilung von chemischen Elementen uzw.—und/oder Oberflächeneigenschaften—wie z.B. spezifische Oberfläche, spezifische aktive Oberfläche, Oberflächenazidität etc—von anorganischen Oxidgelen reproduzierbar einzustellen. Die dabei erhaltenen Eigenschaften weichen z.T. von denen ab, die durch übliche Trocknung oder Calcinierung des gleichen Ausgangsmaterials erhalten werden. So gelingt es abweichend zum konventionellen Verfahren, Produkte mit hoher Oberfläche herzustellen, wobei teilweise gleichzeitig ein großes Porenvolumen einstellbar ist.

Es ist dabei überraschend, daß nach dem erfindungsgemäßen Verfahren überhaupt eine weitgehende Entwässerung möglich ist, da z.B. aus der EP—A—0 065 222 bekannt ist, daß aus extrakthaltigen, verflüssigten Gasen oder aus im überkritischen Zustand befindlichen Gasen durch Kontakt mit einem Trockenmittel wie Kieselgel oder Oxiden wie Magnesium- oxid oder Aluminiumoxid Wasser entfernt wird. Angesichts dieses Standes der Technik war es nicht zu erwarten, gemäß dem erfindungsgemäßen Verfahren wäßrige Oxidgele mit gutem Ergebnis entwässern zu können.

Als "wasserhaltig" werden erfindungsgemäß Gele bezeichnet, deren Lösungsmittelanteil zu

## EP 0 180 900 B1

mindestens 50 Gew.-%, vorzugsweise 70 Gew.-%, insbesondere 90 Gew.-% aus Wasser besteht. Besonders bevorzugt sind rein wässrige Systeme.

Die nachfolgenden Beispiele sollen die Erfindung näher erläutern, ohne ihren Umfang zu beschränken.

Prozentangaben bedeuten Gew.-%.

Beispiele

A) Herstellung der eingesetzten Gele

Wasserglaslösung (5,5% $Na_2O$, Dichte 1,226 g/ml) wurde kontinuierliche mit dem gleichen Volumen wässriger Säure S vereinigt und nach dem Sol-Gel-Verfahren in ein Fällöl vertropft. Nach Basenaustausch mit Lösung B wurde mit Wasser sulfatfrei gewaschen. Weitere Angaben zu Fällung und Basenaustausch finden sich in Tabelle 1.

### TABELLE 1

| Versuch | Säure S | Lösung B | Basenaustausch |
|---------|---------|----------|----------------|
| A1 | 9 % $H_2SO_4$ mit 0,9 % Al-Sulfat | 0,5 % Al-Sulfat | 12 Std. |
| A2 | 9% $H_2SO_4$ | 0.5% $(NH_4)_2SO_4$ | 20 Std. |

Die aus den Versuchen A1 bzw. A2 resultierenden Kugeln von 3 bis 5 mm Durchmesser, die noch ca. 88% Wasser enthielten, wurden für die folgenden Versuche eingesetzt.

Das Produkt A2 wurde außerdem gemahlen und über einen Sprühtrockner zu einem Produkt A3 verarbeitet, das aus feinen, im wesentlichen kugelförmigen Gelteilchen mit einem Durchmesser von 0,1 bis 0,2 mm bestand, die einen Wassergehalt von 54% aufwiesen.

B) Entwässerung von Gelen

Entsprechend der Vorschrift A hergestellte Gele A1 bis A3 wurden in einen thermostatisierbaren Extraktionsautoklaven eingefüllt und unter den in Tabelle 2 angegebenen Bedingungen entwässert. Dabei wurde in der Arbeitsweise "k" unter konstantem Druck während der gesamten Versuchsdauer gearbeitet, d.h. Abzug von fluider Phase und Zusatz von frischem Extraktionsgas erfolgten in genau gleichem Maße. Bei der Arbeitsweise "i" wurde intermittierend extrahiert, d.h. bei Erreichen des in Tabelle 2 angegebenen Druckes wurde zunächst fluide Phase abgezogen, wodurch der Druck im Extraktionsautoklaven um ca. 30 bar absank. Durch Zusatz frischen Extraktionsmittels wurde der ursprüngliche Druck wieder hergestellt, ehe durch Entnahme fluider Phase ein neuer Cyclus begann.

Nach Abschluß der Extraktion erhielt man Produkte E1 bis E4, deren Eigenschaften in Tabelle 3 Vergleichsprodukten V1 bis V3 gegenübergestellt sind. Die Vergleichsprodukte V1 bis V3 wurden aus A1 bis A3 durch übliche Trocknungsmethoden (Trocknung 3—4 Std. bei 140—180°C und Temperung 5—5 Std. bei etwa 200°C für V1 bzw. 600—750°C für V2 und V3) erhalten. Sowhol die Vergleichsprodukte als auch die erfindungsgemäß hergestellten Produkte wiesen einen Gehalt an freiem Wasser von unter 1% auf.

### TABELLE 2

| Versuch | Einsatz | Druck (bar) | Temperatur (°C) | Dauer (Std.) | Art |
|---------|---------|-------------|-----------------|--------------|-----|
| E1 | A1 | 220 | 60—65 | 8 | k |
| E2 | A2 | 330 | 75—80 | 7,2 | k |
| E3 | A3 | 110 | 45—50 | 5 | k |
| E4 | A1 | 330 | 75—80 | 4 | i |

4

# EP 0 180 900 B1

## TABELLE 3

|        | E1    | E4    | V1    | E2    | V2   | E3    | V3  |
|--------|-------|-------|-------|-------|------|-------|-----|
| 0      | 821   | 822   | 750   | 386   | 300  | 380   | 210 |
| PV     | 0,72  | 0,49  | 0,34  | 1,29  | 1,00 | 0,68  | 0,9 |
| WA 10  | 6,04  | 7,19  | 6,00  | 0,73  | 0,72 | 2,24  | 0,5 |
| WA 20  | 10,30 | 11,48 | 11,50 | 2,64  | 1,32 | 4,16  | 0,7 |
| WA 40  | 20,37 | 23,95 | 25,21 | 5,37  | 2,57 | 5,41  | 1,3 |
| WA 60  | 31,48 | 38,19 | 36,63 | 8,17  | 5,07 | 10,36 | 1,9 |
| WA 80  | 64,51 | 56,00 | 40,21 | 18,78 | 9,97 | 30,12 | 4,5 |

In Tabelle 3 wurden folgende Abkürzungen verwendet:

O    = Oberfläche nach BET in $m^2/g$
PV   = Porenvolumen in ml/g,
WA   = Isotherme der Wasserdampfadsorption bei 10, 20 etc% rF

## Patentansprüche

1. Verfahren zur Einstellung der Struktur- und/oder Oberflächeneigenschaften von oxidischen Materialien, bei dem aus Lösungsmittelhaltigen anorganischen Oxidgelen, deren Lösungsmittelanteil zu mindestens 50 Gew.-% aus Wasser besteht, das Lösungsmittel entfernt wird, indem das lösungsmittelhaltige anorganische Oxidgel in eine Extraktionskammer eingebracht und durch diese ein bei Normalbedingungen (25°C und 1 bar) gasförmiges Extraktionsmittel hindurchgeleitet wird, wobei der Druck oberhalb des kritischen Druckes des Extraktionsmittels liegt.

2. Verfahren nach Anspruch 1, dadurch gekennzeichnet, daß man Oxidgele auf Basis von Magnesium, Aluminium, Silicium, Zink, Titan, Zirkon und/oder Hafnium, vorzugsweise Aluminium und/oder Silicium behandelt.

3. Verfahren nach Anspruch 1 und/oder 2, dadurch gekennzeichnet, daß man Oxidgele mit einem Wassergehalt von 30 bis 95 Gew.-%, vorzugsweise von 40 bis 90 Gew.-% behandelt.

4. Verfahren nach einem der vorangehenden Ansprüche, dadurch gekennzeichnet, daß man Oxidgele behandelt, die zuvor noch nicht Temperaturen von über 100°C, vorzugsweise nicht über 50°C ausgesetzt waren.

5. Verfahren nach einem der vorhergehenden Ansprüche, dadurch gekennzeichnet, daß das Extraktionsmittel ausgewählt wird aus $CO_2$, $CHF_3$, $CF_3—CF_3$, $CHCl=CF_2$, $CF_3—CH_3$, $CHF_2—CH_3$, $CHF_2Cl$, $CF_3Cl$, $CF_2=CF_2$, $CF_2Cl_2$, $C_3F_8$, $SF_6$, $N_2O$, $SO_2$, Äthan, Äthen, Proban, Propen, Luft, $N_2$, $NH_3$, Methyl-, Äthylamin und bevorzugt $CO_2$ ist.

6. Verfahren nach einem der vorhergehenden Ansprüche, dadurch gekennzeichnet, daß man lösungsmittelhaltige anorganische Oxidgele verwendet, deren Lösungsmittelanteil zu 70 Gew.-%, insbesondere 90 Gew.-%, besonders bevorzugt rein aus Wasser besteht.

7. Verfahren nach einem der vorangehenden Ansprüche, dadurch gekennzeichnet, daß man die Behandlung bei Temperaturen oberhalb von 10°C vorzugsweise oberhalb von 25°C vornimmt.

8. Verfahren nach Anspruch 6, dadurch gekennzeichnet, daß man die Behandlung bei maximal 100°C vornimmt.

9. Verfahren nach einem der vorhergehenden Ansprüche, dadurch gekennzeichnet, daß man die Behandlung bei einem Druck vom kritischen Druck (Pk) bis zu 1000 bar, vorzugsweise bis zu 500 bar vornimmt.

10. Verfahren nach einem der vorangehenden Ansprüche, dadurch gekennzeichnet, daß man Oxidgele von im wesentlichen kugelförmiger Gestalt behandelt.

11. Verfahren nach einem der vorangehenden Ansprüche, dadurch gekennzeichnet, daß man Oxidgele behandelt, die zusätzlich feste Feinanteile und/oder Zusätze an Metallionen enthalten.

## Revendications

1. Procédé pour ajuster les caractéristiques de la structure et/ou de la surface de matériaux oxydés, dans lequel on soumet des gels d'oxydes minéraux contenant des solvants, et dont la partie solvants consiste pour au moins 50% en poids en de l'eau, à une élimination de solvant, en introduisant dans une chambre d'extraction le gel d'oxyde minéral contenant du solvant et en faisant traverser cette chambre par un agent d'extraction, gazeux dans les conditions normales (25°C et 1 bar) la pression se situant au dessus de la pression critique de l'agent d'extraction.

2. Procédé selon la revendication 1, caractérisé en ce qu'on traite des gels d'oxydes à base de magnésium, d'aluminium, de silicium, de zinc, de titane, de zirconium et/ou d'hafnium, avantageusement d'aluminium et/ou de silicium.

3. Procédé selon la revendication 1 ou 2, caractérisé en ce qu'on traite des gels d'oxydes ayant une teneur en eau de 30 à 95% en poids, avantageusement de 40 à 90% en poids.

4. Procédé selon l'une des revendications précédentes, caractérisé en ce qu'on traite des oxydes de gels qui n'ont auparavant pas été exposés à des températures supérieures à 100°C, avantageusement pas à des températures supérieures à 50°C).

5. Procédé selon l'une des revendications précédentes, caractérisé en ce que l'agent d'extraction est choisi parmi $CO_2$, $CHF_3$, $CF_3$—$CF_3$, $CHCl=CF_2$, $CF_3$—$CH_3$, $CHF_2$—$CH_3$, $CHF_2Cl$, $CF_3Cl$, $CF_2=CF_2$, $CF_2Cl_2$, $C_3F_8$, $SF_6$, $N_2O$, $SO_2$, l'éthane, l'éthylène, le propane, le propène, l'air, $N_2$, $NH_3$, la méthylamine, l'éthylamine, et de préférence, $CO_2$.

6. Procédé selon l'une des revendications précédentes, caractérisé en ce qu'on utilise des gels d'oxydes minéraux contenant des solvants, dont la partie solvants comporte à 70% en poids, en particulier à 90% en poids, et de façon particulièrement préférée consiste purement en eau.

7. Procédé selon l'une des revendications précédentes, caractérisé en ce qu'on entreprend le traitement a des températures supérieures à 10°C, avantageusement au dessus de 25°C.

8. Procédé selon la revendication 6, caractérisé en ce qu'on entreprend le traitement à 100°C au maximum.

9. Procédé selon l'une des revendications précédentes, caractérisé en ce qu'on entreprend le traitement sous une pression allant de la pression critique ($p_c$) à 1 000 bars, avantageusement jusqu'à 500 bars.

10. Procédé selon l'une des revendications précédentes, caractérisé en ce qu'on traite des gels d'oxydes ayant un aspect de forme essentiellement sphérique.

11. Procédé selon l'une des revendications précédentes, caractérisé en ce qu'on traite des gels d'oxydes contenant en outre des parties constituées par des solides fins et/ou par des additions d'ions de métaux.

## Claims

1. Process for the adjustment of the structural and/or surface properties of oxidic materials, in which the solvent is removed from solvent-containing inorganic oxide gels, at least 50% by weight of the solvent content of which consists of water, by introducing the solvent-containing inorganic oxide gel into an extraction chamber and passing therethrough an extracting agent which is gaseous under normal conditions (25°C and 1 bar), with the pressure being above the critical pressure of the extracting agent.

2. Process according to Claim 1, characterised in that oxide gels on the basis of magnesium, aluminium, silicon, zinc, titanium, zirconium and/or hafnium, preferably aluminium and/or silicon, are treated.

3. Process according to Claim 1 and/or 2, characterised in that oxide gels with a water content of 30 to 95% by weight, preferably of 40 to 90% by weight, are treated.

4. Process according to one of the preceding Claims, characterised in that oxide gels are treated which previously have not yet been exposed to temperatures of above 100°C, preferably not above 50°C.

5. Process according to one of the preceding Claims, characterised in that the extracting agent is selected from $CO_2$, $CHF_3$, $CF_3$—$CF_3$, $CHCl=CF_2$, $CF_3$—$CH_3$, $CHF_2$—$CH_3$, $CHF_2Cl$, $CF_3Cl$, $CF_2=CF_2$, $CF_2Cl_2$, $C_3F_8$, $SF_6$, $N_2O$, $SO_2$, ethane, ethene, propane, propene, air, $N_2$, $NH_3$, methylamine, ethylamine, and preferably $CO_2$.

6. Process according to one of the preceding Claims, characterised in that solvent-containing inorganic oxide gels are used, the solvent content of which is 70%, in particular 90%, and particularly preferably purely, of water.

7. Process according to one of the preceding Claims, characterised in that the treatment is carried out at temperatures above 10°C, preferably above 25°C.

8. Process according to Claim 6, characterised in that the treatment is carried out at a maximum of 100°C.

9. Process according to one of the preceding Claims, characterised in that the treatment is carried out at a pressure from the critical pressure ($p_x$) up to 1000 bar, preferably up to 500 bar.

10. Process according to one of the preceding Claims, characterised in that oxide gels of substantially spherical shape are treated.

11. Process according to one of the preceding Claims, characterised in that oxide gels are treated which additionally contain solid fine portions and/or additions of metal ions.